# DEMANDE DE BREVET EUROPEEN

(11) **EP 4 322 376 A1**
(43) Date de publication de la demande: **14.02.2024**
(21) Numéro de dépôt: 23188345.5
(22) Date de dépôt: 28.07.2023
(51) Int. Cl.: H02K 1/30, H02K 1/32

(54) **ROTOR DE MACHINE ÉLECTRIQUE AVEC CANAL DE REFROIDISSEMENT**

(30) Priorité: 10.08.2022 FR 2208221
(71) Demandeur: IFP Energies nouvelles, 92500 Rueil-Malmaison (FR)
(72) Inventeur: VENTURI, Stephane, 92852 RUEIL-MALMAISON CEDEX (FR)
(74) Mandataire: IFP Energies nouvelles

(57) **Abrégé**

La présente invention concerne un rotor (1) comprenant un corps de rotor et un empilement de tôles (2) fretté sur le corps du rotor. Le corps du rotor comprend un arbre de rotor (3), un premier manchon (4) et au moins un premier canal (5) de refroidissement. Chaque premier canal (5) de refroidissement est longitudinal, et est agencé entre l'arbre de rotor (3) et le premier manchon (4). De plus, le premier canal (5) est agencé à la périphérie de l'arbre du rotor (3).

## Description

### Domaine technique

La présente invention concerne le domaine des machines électriques tournantes, et en particulier le refroidissement de ces machines électriques qui peuvent fonctionner en tant que moteur électrique ou en tant que générateur électrique. Les machines électriques de l'invention peuvent notamment être utilisées comme moteur électrique dans des applications de transport (automobile par exemple), des engins et outils agricoles.

L'invention peut notamment être utilisée pour une machine électrique tournante synchrone, notamment une machine électrique synchro-réluctante, assistée ou non d'aimants permanents, mais peut également être appliquée à d'autres types de machines électriques, comme des machines synchrones ou asynchrones.

Une machine électrique comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entraîner en rotation le rotor (fonctionnement en tant que moteur électrique). Le stator comprend généralement un corps de stator et des bobines qui entourent au moins partiellement le corps de stator.

Lors de leur fonctionnement, les machines électriques s'échauffent du fait des pertes électromagnétiques (pertes par effet Joule, pertes fer et éventuelles pertes aimants permanents) et mécaniques. Par exemple, si les aimants permanents ne sont pas refroidis, le flux magnétique est moins intense, ce qui conduit à une perte de couple et donc une dégradation des performances de la machine électrique. Une démagnétisation irréversible des aimants peut se produire. Cet échauffement nuit à leur fonctionnement et conduit à la dégradation de leurs performances (puissance et rendement). Les divers composants électromagnétiques d'une machine électrique, ainsi que certains matériaux isolants utilisés dans les pièces de la machine électrique, sont ainsi sensibles à l'échauffement produit en fonctionnement, et leur refroidissement est indispensable pour dissiper la chaleur produite, afin de conserver un bon rendement de la machine électrique, d'assurer une répétabilité de ses performances, d'allonger sa durée de vie et de limiter la maintenance. De plus, le rotor est un élément critique, car il est isolé thermiquement du système de refroidissement du stator. Il est donc souhaité de prévoir un système de refroidissement capable d'améliorer la tenue thermique de la machine électrique.

La recherche d'un refroidissement performant est donc une préoccupation majeure pour les fabricants et les intégrateurs de machines électriques.

### Technique antérieure

Aujourd'hui, les stators (parties statiques des moteurs) sont quasi systématiquement refroidis, mais les rotors le sont peu en raison de la difficulté d'aménager et d'alimenter des canaux dans des pièces tournantes. Le refroidissement des rotors présente cependant un grand intérêt, notamment pour la conservation de l'intégrité des aimants permanents généralement présents dans les rotors.

Différents types de refroidissement existent, souvent adaptés à la puissance de la machine électrique, parmi lesquels les systèmes de refroidissement par air, généralement d'efficacité moindre et agressifs pour l'intérieur du moteur, les systèmes de refroidissement par liquide, par exemple par eau, notamment utilisés dès que les pertes sont importantes comme dans le cas des moteurs de traction électriques, ou par huile. D'autres systèmes de refroidissement par hélium ou azote liquide peuvent être utilisés pour les machines électriques de centrales électriques.

Au sein des systèmes de refroidissement liquide des rotors de moteurs électriques proposés habituellement, le fluide de refroidissement circule dans la partie centrale du rotor, qui est de fait assez éloignée des aimants permanents. L'échange des calories est indirect entre les aimants et le fluide, avec un échange par conduction entre les aimants permanents et le fer, puis par conduction entre le fer et l'arbre rotor, puis au fluide de refroidissement.

Les canaux sont souvent au plus près de l'axe rotor pour d'une part faciliter l'alimentation, et d'autre part pour limiter les besoins de la pompe de circulation dont les capacités pour vaincre la contre pression sont d'autant plus élevées que les canaux sont éloignés de l'axe. Toutefois, le fait d'implanter les canaux au plus près de l'axe limite leur nombre, limitant de fait les capacités d'échange de chaleur.

Les principales caractéristiques des solutions existantes de refroidissement liquide des rotors de machines sont les suivantes :
- Protubérance axiale face à l'arbre de rotor pour une alimentation axiale du fluide caloporteur qui occupe un volume non désirable (prend de la place aux parties actives),
- Pour résoudre le problème d'encombrement cité, des soutions avec alimentation radiale existent et se heurtent à une évolution de contre-pression du fluide caloporteur, fonction du régime par centrifugation du fluide lui-même, cela limite le débit à haute vitesse et le rendement système, en raison des pompes d'alimentation énergivores (forte pression et débit),
- Les étanchéités dynamiques nécessaires pour des solutions à alimentation radiale induisent des pertes mécaniques grevant le rendement en usage (faible puissance) et l'autonomie des véhicules, ces solutions présentent également une usure nécessitant le remplacement de pièces d'usure, et
- L'arbre du rotor est souvent complexe à réaliser avec des fonctions de perçages, des formes spécifiques, telles que des formes hélicoïdales, des exemples d'arbre de rotor complexes sont décrits notamment dans les demandes de brevet DE102016118206, FR3005538, DE102019211523 et DE102019211555.

### Résumé de l'invention

L'invention a pour but de réaliser un refroidissement efficace (au plus près des aimants permanents), avec une réalisation simple, tout en limitant les contraintes de serrage de l'empilement de tôles sur le corps du rotor. Pour cela, l'invention concerne un rotor comprenant un corps de rotor et un empilement de tôles fretté sur le corps du rotor. Le corps du rotor comprend un arbre de rotor, un premier manchon et au moins un premier canal de refroidissement. Chaque premier canal de refroidissement est longitudinal, et est agencé entre l'arbre de rotor et le premier manchon. De plus, le premier canal est agencé à la périphérie de l'arbre du rotor. Cet agencement spécifique du premier canal permet un refroidissement au plus près des aimants permanents du rotor, qui sont agencés dans l'empilement de tôles. De plus, la forme longitudinale à la périphérie du rotor permet une réalisation simple du premier canal. L'ajout d'un premier manchon autour de l'arbre du rotor permet de fermer le premier canal, et permet d'augmenter le diamètre du rotor, par conséquent, de limiter les contraintes de serrage de l'empilement de tôles sur le corps du rotor.
En outre, l'invention concerne une machine électrique comprenant un tel rotor.

L'invention concerne un rotor de machine électrique, ledit rotor comprenant un corps de rotor et un empilement de tôles fretté sur ledit corps de rotor, ledit corps de rotor comprenant un arbre de rotor, un premier manchon sur lequel est fretté ledit empilement de tôles, et au moins un premier canal pour la circulation d'un liquide de refroidissement. Ledit au moins un premier canal est longitudinal, et agencé à la périphérie radiale dudit arbre du rotor entre ledit arbre du rotor et ledit premier manchon.

Selon un mode de réalisation, chaque premier canal est formé par une rainure longitudinale réalisée sur la surface extérieure dudit arbre du rotor.

Conformément à une mise en oeuvre, ledit corps de rotor comprend un deuxième manchon agencé entre ledit arbre de rotor et ledit premier manchon.

Avantageusement, au moins un deuxième canal longitudinal est formé à la périphérie extérieure dudit deuxième manchon, ledit au moins deuxième canal étant relié audit au moins un premier canal.

De manière avantageuse, ledit deuxième manchon comprend au moins une rainure longitudinale réalisée sur la surface extérieure et/ou sur la surface intérieure pour réaliser respectivement ledit au moins un deuxième canal et/ou ledit au moins un premier canal.

Selon un aspect, chaque manchon est monté par frettage.

Selon une option de réalisation, chaque manchon est réalisé en aluminium ou en alliage d'aluminium, ou en acier.

Conformément à un mode de réalisation, ledit premier manchon comprend des ouvertures radiales à ses extrémités.

Selon une mise en oeuvre, l'entrée et la sortie dudit liquide de refroidissement sont agencées à une unique extrémité dudit corps de rotor, ou aux deux extrémités dudit corps de rotor.

En outre, l'invention concerne une machine électrique comprenant un rotor selon l'une des caractéristiques précédentes, un stator coaxial audit rotor, un carter entourant ledit stator et deux flasques agencés respectivement aux extrémités dudit carter.

Selon un mode de réalisation, une alimentation en liquide de refroidissement est agencée dans un premier flasque et une évacuation du liquide de refroidissement est agencée dans ledit premier flasque ou dans le deuxième flasque, l'alimentation en liquide de refroidissement étant reliée audit au moins un premier canal.

Conformément à une mise en oeuvre, au moins un desdits flasques comporte des moyens d'étanchéité entre ledit corps de rotor et un flasque, notamment des joints ou des chicanes.

D'autres caractéristiques et avantages du dispositif selon l'invention, apparaîtront à la lecture de la description ci-après d'exemples non limitatifs de réalisations, en se référant aux figures annexées et décrites ci-après.

### Liste des figures

La figure 1 illustre une vue en coupe axiale d'un rotor selon un premier mode de réalisation de l'invention.
La figure 2 illustre une vue en coupe transversale d'un rotor selon le premier mode de réalisation de l'invention.
La figure 3 illustre une vue en coupe axiale d'un rotor selon un deuxième mode de réalisation de l'invention.
La figure 4 illustre une vue en coupe transversale d'un rotor selon le deuxième mode de réalisation de l'invention.
La figure 5 illustre une vue en coupe axiale d'un rotor selon un troisième mode de réalisation de l'invention.
La figure 6 illustre une implémentation dans des flasques du rotor selon le premier mode de réalisation de l'invention.
La figure 7 illustre une implémentation dans un flasque du rotor selon le deuxième mode de réalisation de l'invention.
La figure 8 illustre une vue en coupe transversale d'un rotor selon un quatrième mode de réalisation de l'invention.
La figure 9 illustre une vue en coupe transversale d'un rotor selon un cinquième mode de réalisation de l'invention.
La figure 10 illustre une vue en coupe transversale d'un rotor selon un sixième mode de réalisation de l'invention.

### Description des modes de réalisation

La présente invention concerne un rotor d'une machine électrique, notamment une machine électrique du type synchro-réluctante assistée d'aimants permanents. Toutefois, la présente invention est adaptée à toute machine électrique, notamment toute machine électrique comprenant au moins un aimant permanent inséré dans le rotor.

Selon l'invention, le rotor comprend :
- Un corps de rotor,
- Un empilement de tôles, l'empilement de tôles étant fretté sur le corps de rotor, les tôles sont réalisées en matériau ferromagnétique de manière à guider le flux magnétique des aimants permanents et du stator. Les tôles sont préformées pour former au moins un logement pourvu d'un aimant permanent, et pour former éventuellement au moins une barrière de flux.

De plus, le corps de rotor comprend :
- Un arbre de rotor, également appelé arbre d'entraînement,
- Un premier manchon appelé également manchon externe, sur lequel est fretté l'empilement de tôles (ainsi la surface extérieure du premier manchon est cylindrique), le premier manchon entourant l'arbre de rotor, étant coaxial avec l'arbre de rotor, et étant fixe par rapport à l'arbre de rotor, et
- Au moins un premier canal pour la circulation d'un liquide de refroidissement au sein du corps du rotor.

Ainsi, grâce au premier canal, le corps de rotor peut être refroidi, ce qui permet également un refroidissement de l'empilement de tôles et par conséquent des aimants permanents.

Conformément à l'invention, l'au moins un premier canal est purement longitudinal, en d'autres termes, il est rectiligne et parallèle à l'axe du rotor. Chaque premier canal ne comprend aucune portion circonférentielle (plus complexe à former). Chaque premier canal est agencé entre l'arbre de rotor et le premier manchon, en étant agencé à la périphérie de l'arbre de rotor. Ainsi, chaque premier canal n'est pas agencé sur l'axe de l'arbre de rotor, mais au niveau de la surface extérieure de celui-ci (sur sa circonférence), ce qui favorise le refroidissement sur un plus grand diamètre, permettant un refroidissement plus efficace de l'empilement de tôles et donc des aimants (les calories provenant des aimants permanents ne traversent plus le rayon de l'arbre du rotor par rapport à une solution pour laquelle le canal se trouverait sur l'axe de l'arbre du rotor). En outre, la fabrication de chaque premier canal se retrouve facilitée, permettant une conception simple et un montage facilité du rotor. Au sein de chaque premier canal, le liquide de refroidissement circule uniquement dans un (seul) sens ; lorsque le corps de rotor comprend plusieurs premiers canaux, le liquide de refroidissement circule dans tous les premiers canaux dans le même sens (par exemple d'une extrémité à une autre du corps de rotor). La disposition des canaux ainsi obtenus présente la particularité de nécessiter une pompe de petite capacité pour faire circuler le liquide de refroidissement dans ces canaux. L'utilisation du premier manchon augmente le diamètre de frettage de l'empilement de tôles, ce qui est favorable pour la diminution en besoins de tôles ferromagnétiques (faible conducteur), et d'autre part pour améliorer la transmission du couple entre le corps du rotor et l'empilement de tôles.

De préférence, le corps de rotor peut comprendre une pluralité de premiers canaux, avantageusement régulièrement répartis sur la circonférence de l'arbre du rotor. De cette manière, la surface d'échange de chaleur augmente, permettant un refroidissement plus important et plus homogène du rotor. De préférence, le nombre de premiers canaux peut être déterminé de telle sorte que la largeur entre deux premiers canaux consécutifs est sensiblement identique à la largeur d'un premier canal. Cette mise en oeuvre donne un bon compromis entre tenue mécanique et refroidissement du rotor. En variante, d'autres conceptions peuvent être envisagées.

Avantageusement, la section transversale du premier canal peut être sensiblement rectangulaire, triangulaire, circulaire, elliptique, ou avoir toute forme analogue. De préférence, la profondeur du canal peut être sensiblement équivalente à sa largeur.

Selon un mode de réalisation de l'invention, chaque premier canal peut être formé par une rainure réalisée sur la surface extérieure de l'arbre de rotor. Ce mode de réalisation permet la création de l'au moins un premier canal sur la circonférence de l'arbre de rotor, et permet la fermeture du canal par un manchon.

Par exemple, le premier canal peut être formé sur la surface extérieure de l'arbre de rotor par usinage, par extrusion ou par toute méthode analogue.

Conformément à une mise en oeuvre de l'invention, le corps de rotor peut comprendre un deuxième manchon, appelé également manchon interne. Le deuxième manchon entoure l'arbre de rotor, et est coaxial avec l'arbre de rotor et le premier manchon. De plus, le deuxième manchon est fixe par rapport à l'arbre de rotor et par rapport au premier manchon. De plus, le deuxième manchon est agencé entre l'arbre de rotor et le premier manchon. Ainsi, du centre vers l'extérieur du corps de rotor, sont agencés l'arbre de rotor, le deuxième manchon et le premier manchon. L'utilisation de deux manchons augmente le diamètre de frettage de l'empilement de tôles, ce qui est favorable d'une part, pour la diminution en besoins de tôles ferromagnétiques (faible conducteur), et d'autre part pour améliorer la transmission du couple entre le corps du rotor et l'empilement de tôles.

Selon une option de réalisation de cette mise en oeuvre, le corps de rotor peut comprendre au moins un deuxième canal, formé à la périphérie du deuxième manchon. En d'autres termes, l'au moins un deuxième canal est agencé entre le deuxième manchon et le premier manchon. Le deuxième canal est donc situé à une distance radiale de l'axe du rotor supérieure à la distance radiale du premier canal par rapport à l'axe du rotor. Autrement dit, le rayon sur lequel est agencé le deuxième canal est supérieur au rayon sur lequel est agencé le premier canal. De plus, chaque deuxième canal est relié à au moins un premier canal, de sorte que le liquide de refroidissement circule d'abord dans le premier canal puis dans le deuxième canal. Pour la liaison entre deuxième canal et premier canal, une connexion radiale (perçage radial) peut être prévue. Cette architecture présente l'intérêt de disposer d'un circuit de circulation du liquide de refroidissement progressant sur des diamètres croissants, diminuant significativement les besoins de pompage en termes de pression de la pompe, grâce à l'utilisation de la force centrifuge générée par la rotation du rotor. Le corps de pompe ainsi formé réalise une partie de l'effort de pompage, diminuant la contrainte sur la pression d'alimentation. Il est même envisageable que cet effet de pompage du système de refroidissement suffise à la circulation du fluide. Cela permet, dans ce cas, de supprimer la pompe.

L'au moins un deuxième canal est purement longitudinal, en d'autres termes, il est rectiligne et parallèle à l'axe du rotor. Le deuxième canal ne comporte aucune portion circonférentielle. L'au moins un deuxième canal est agencé entre le premier manchon et le deuxième manchon, en étant agencé à la périphérie du deuxième manchon.

Ainsi, le deuxième canal n'est pas agencé sur l'axe du corps de rotor, mais au niveau de la surface extérieure du deuxième manchon (sur sa circonférence), ce qui favorise le refroidissement sur un plus grand diamètre, permettant un refroidissement plus efficace de l'empilement de tôles et donc des aimants. En outre, la fabrication du deuxième canal se retrouve facilitée, permettant une conception simple et un montage du rotor simplifié. Au sein du deuxième canal, le liquide de refroidissement ne circule que dans un sens ; lorsque le corps de rotor comprend plusieurs deuxièmes canaux, le liquide de refroidissement circule dans tous les deuxièmes canaux dans le même sens (par exemple, d'une extrémité à une autre du corps de rotor). De préférence, le sens de circulation du liquide de refroidissement dans le deuxième canal peut être opposé au sens de circulation du liquide de refroidissement dans le premier canal. Ainsi, l'entrée et la sortie du liquide de refroidissement dans les canaux sont situés à une seule extrémité du rotor.

De préférence, le corps de rotor peut comprendre une pluralité de deuxièmes canaux, avantageusement régulièrement répartis sur la circonférence du deuxième manchon. De cette manière, la surface d'échange de chaleur augmente, permettant un refroidissement plus important et plus homogène du rotor.

Avantageusement, la section transversale du deuxième canal peut être sensiblement rectangulaire, triangulaire, circulaire, elliptique, ou toute forme analogue.

Selon un mode de réalisation de l'invention, chaque deuxième canal peut être formé par une rainure sur la surface extérieure du deuxième manchon. Ce mode de réalisation permet la création de l'au moins un deuxième canal sur la circonférence de l'arbre de rotor, et permet la fermeture du deuxième canal par le premier manchon.

Par exemple, chaque deuxième canal peut être formé sur la surface extérieure du deuxième manchon par usinage, par extrusion ou par toute méthode analogue.

Selon une option de réalisation, chaque premier canal peut être formé par une rainure sur la surface intérieure du deuxième manchon. Cette option de réalisation permet la création de l'au moins un premier canal à la périphérie de l'arbre du rotor sans modifier l'arbre de rotor. De plus, l'arbre de rotor permet la fermeture du premier canal.

Selon un exemple de réalisation, le deuxième manchon peut avoir des rainures externes (pour les deuxièmes canaux), et un alésage interne lisse (sans rainure interne). En variante, le deuxième manchon peut avoir des rainures internes et externes (respectivement pour les premiers et deuxièmes canaux). Cette variante permet d'avoir à réaliser des rainures que sur une seule pièce.

Selon un exemple de réalisation, l'arbre de rotor peut comprendre des rainures sur sa surface externe, le premier manchon peut comprendre des rainures sur sa surface interne, et le deuxième manchon peut être lisse (c'est-à-dire purement cylindrique).

En variante, l'arbre de rotor peut être lisse, et chaque manchon (le premier et le cas échéant le deuxième manchon) comprend (comprennent) des rainures sur sa surface interne (sur leurs surfaces internes) pour former les premiers et deuxièmes canaux. Cette option de réalisation permet la création d'au moins un premier canal à la périphérie de l'arbre du rotor sans modifier l'arbre de rotor. De plus, l'arbre de rotor permet la fermeture du premier canal.

Conformément à une mise en oeuvre de l'invention, chaque manchon peut être monté par frettage, en d'autres termes, chaque manchon peut être monté de manière serrée. Pour le mode de réalisation pour lequel seul le premier manchon est utilisé, le premier manchon est fretté sur l'arbre de rotor. Pour le mode de réalisation d'un rotor comprenant deux manchons, le deuxième manchon est fretté sur l'arbre de rotor et le premier manchon est fretté sur le deuxième manchon. Ce montage permet une fixation des deux éléments, et permet la reprise des efforts et permet l'assurer l'étanchéité des premier et deuxième canaux.

Selon un aspect de l'invention, chaque manchon (premier manchon et le cas échéant le deuxième manchon) peut être réalisé en matériau métallique léger, par exemple en aluminium, en alliage d'aluminium, ou tout matériau analogue. Ainsi, il est possible d'augmenter le diamètre du corps de rotor sans alourdir la machine électrique, voire en allégeant la machine électrique. En variante, chaque manchon peut être réalisé en acier.

Selon une option de réalisation, l'arbre de rotor peut être en acier ou tout matériau analogue.

Selon un mode de réalisation de l'invention, le premier manchon peut comprendre des ouvertures radiales à ses extrémités. Les ouvertures radiales peuvent être reliées au premier ou le cas échant au deuxième canal. Ainsi, les ouvertures radiales peuvent permettre une aspersion (grâce à la force centrifuge) de liquide de refroidissement, de préférence de l'huile, sur le stator, en particulier sur les têtes de bobines de stator et/ou permettre d'alimenter en huile le rotor magnétique au plus près des aimants dans le cas de refroidissement par huile (par exemple, on peut prévoir des canaux sensiblement radiaux de communication entre le corps de rotor et les tôles ferromagnétiques). De cette manière, le liquide de refroidissement en sortie des ouvertures radiales contribue au refroidissement des têtes de bobines du stator qui sont des points chauds du stator et/ou au refroidissement complémentaire du rotor. Pour ce mode de réalisation, la liaison entre le premier canal et le deuxième canal peut être situé au centre (dans la direction longitudinale) du premier manchon. Ainsi, pour cette configuration, le premier canal part d'une extrémité du rotor vers le centre du rotor, et le deuxième canal est sur quasiment toute la longueur du premier manchon, le liquide de refroidissement est guidé vers les deux extrémités du deuxième canal. En variante, cette configuration est compatible avec seulement les premiers canaux.

Afin d'alimenter et d'évacuer le liquide de refroidissement du premier canal et le cas échéant du deuxième canal, le corps de rotor comporte une entrée et une sortie du liquide de refroidissement.

Pour le mode de réalisation d'un rotor comprenant un seul manchon et par conséquent uniquement le premier canal, l'entrée et la sortie du liquide de refroidissement se trouvent aux extrémités opposées du corps du rotor.

Pour le mode de réalisation d'un rotor comprenant deux manchons et par conséquent le premier canal et le deuxième canal, l'entrée et la sortie du liquide se trouvent à une unique extrémité du corps du rotor. De cette manière, seule une extrémité du corps de rotor a besoin d'être équipée de moyens d'étanchéité, ce qui facilite la conception de la machine électrique.

Le liquide de refroidissement peut être de tout type, par exemple de l'eau, de l'huile ou tout liquide analogue.

En outre, l'invention concerne une machine électrique, notamment une machine électrique tournante. Selon l'invention, la machine électrique comprend :
- Un stator,
- Un rotor, le rotor étant coaxial avec le stator autour d'un axe longitudinal, selon l'une quelconque des variantes ou des combinaisons de variantes décrites précédemment,
- Un carter, entourant radialement le stator,
- Deux flasques, les flasques étant agencés aux extrémités longitudinales du carter, les flasques étant fixés au carter, et formant avec le carter une enveloppe extérieure de la machine électrique, cette enveloppe extérieure servant de protection.

Classiquement, le rotor est mobile en rotation et le stator est fixe par rapport au carter. Le stator entoure le rotor. En d'autres termes, il s'agit d'une machine électrique à rotor interne. Le stator comprend un corps de stator et des bobines insérées dans le corps du stator. Aux deux extrémités longitudinales du corps du stator, les bobines dépassent et sont repliées. Cette partie forme ce qu'on appelle les têtes de bobines. Ainsi, la machine électrique comprend des têtes de bobines à chaque extrémité longitudinale.

Lorsque la machine électrique fonctionne en tant que moteur, le stator génère la rotation du rotor par génération d'un champ magnétique créé par le stator. Lorsque la machine électrique fonctionne en tant que générateur électrique, la rotation du rotor peut générer une énergie électrique dans les bobines du stator au moyen d'un champ magnétique créé par le rotor.

De préférence, la machine électrique peut être une machine synchrone, notamment une machine synchro-réluctance, de manière préférée une machine synchro-réluctante assistée d'aimants permanents. En effet, de telles machines électriques génèrent de la chaleur importante à évacuer. Toutefois, l'invention peut être appliquée à d'autres types de machine électrique, par exemple les machines asynchrones, les machines réluctantes, etc.

Conformément à une mise en oeuvre de l'invention, la machine électrique peut comprendre une alimentation en liquide de refroidissement du corps de rotor permettant d'apporter du liquide de refroidissement dans chaque premier canal. De plus, la machine électrique peut comprendre une évacuation en liquide de refroidissement permettant d'évacuer le liquide de refroidissement de chaque premier canal ou le cas échant de chaque deuxième canal.

Pour le mode de réalisation pour lequel le rotor comprend seulement le premier manchon et seulement le premier canal, l'alimentation en liquide de refroidissement est agencée dans un flasque à une extrémité du rotor, et l'évacuation en liquide de refroidissement est agencée dans l'autre flasque à l'autre extrémité du rotor.

Pour le mode de réalisation pour lequel le rotor comprend le premier manchon et le deuxième manchon ainsi que les premiers et deuxièmes canaux, l'alimentation et l'évacuation en liquide de refroidissement sont agencées dans le même flasque, facilitant le montage et l'étanchéité.

Conformément à une mise en oeuvre de l'invention, la machine électrique peut comprendre des éléments d'étanchéité entre le corps de rotor et au moins un flasque. Chaque élément d'étanchéité peut être un joint d'étanchéité ou une chicane (appelée aussi labyrinthe).

Pour le mode de réalisation pour lequel le rotor comprend seulement le premier manchon et seulement le premier canal, chaque flasque peut comporter deux éléments d'étanchéité : un premier entre le flasque et l'arbre du rotor, et un deuxième entre le flasque et le premier manchon. Le premier élément d'étanchéité peut être un joint d'étanchéité. Le deuxième moyen d'étanchéité peut être un joint d'étanchéité ou une chicane.

Pour le mode de réalisation pour lequel le rotor comprend le premier manchon et le deuxième manchon ainsi que les premiers et deuxièmes canaux, le flasque dans lequel sont prévues l'alimentation et l'évacuation, peut comporter trois éléments d'étanchéités, et l'autre flasque ne comporte aucune étanchéité pour le liquide de refroidissement. Pour le flasque avec l'alimentation et l'évacuation, on peut disposer un premier élément d'étanchéité entre l'arbre de rotor et le flasque, un deuxième élément d'étanchéité entre le deuxième manchon et le flasque, et un troisième élément d'étanchéité entre le premier manchon et le flasque. Selon un premier exemple, le premier et le troisième éléments d'étanchéité peuvent être des joints d'étanchéité, et le deuxième élément d'étanchéité peut être une chicane. Selon un deuxième exemple, le premier élément d'étanchéité peut être un joint d'étanchéité, et le deuxième et le troisième éléments d'étanchéité peuvent être des chicanes. Ce dernier exemple ne nécessite qu'un seul joint d'étanchéité. D'autres configurations peuvent être envisagées.

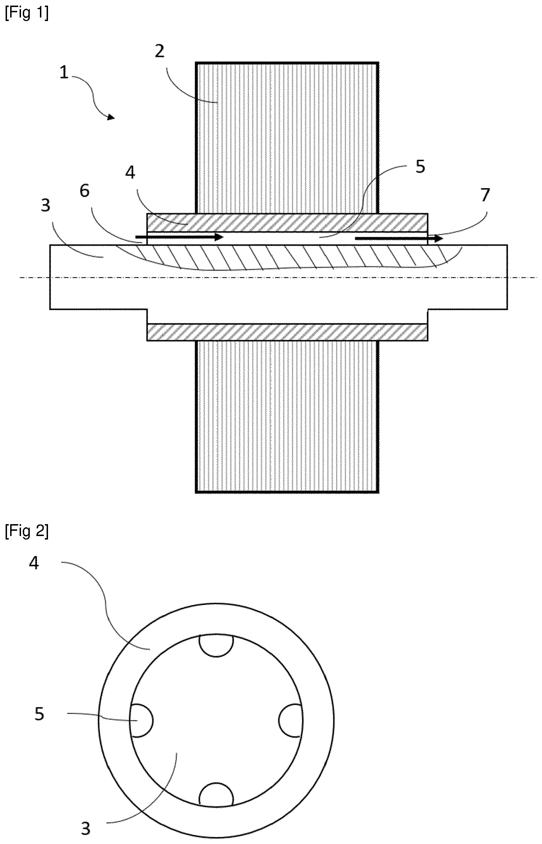

Les figures 1 et 2 illustrent, schématiquement et de manière non limitative, un rotor selon un premier mode de réalisation de l'invention. La figure 1 est une vue en coupe axiale et la figure 2 est une vue en coupe transversale. Le rotor 1 comprend un corps de rotor et un empilement de tôles 2, fretté sur le corps de rotor. L'empilement de tôles 2 n'est pas illustré sur la figure 2. Le corps de rotor comprend un arbre de rotor 3 et un premier manchon 4, fretté sur l'arbre de rotor 3. Pour le mode de réalisation illustré, quatre premiers canaux 5 sont formés par des rainures à la périphérie de l'arbre du rotor 3 (toutefois, le nombre de premiers canaux peut être différent). Les premiers canaux 5 sont délimités par les rainures réalisées dans l'arbre du rotor 3 et par le premier manchon 4. Pour le mode de réalisation illustré, les rainures délimitant les premiers canaux 5 ont sensiblement une section circulaire (toutefois, elles peuvent avoir d'autres forme). Les premiers canaux 5 ont une entrée 6 à une extrémité du rotor et une sortie 7 à l'autre extrémité du rotor. Les flèches en noir illustrent la circulation du liquide de refroidissement dans les premiers canaux 5.

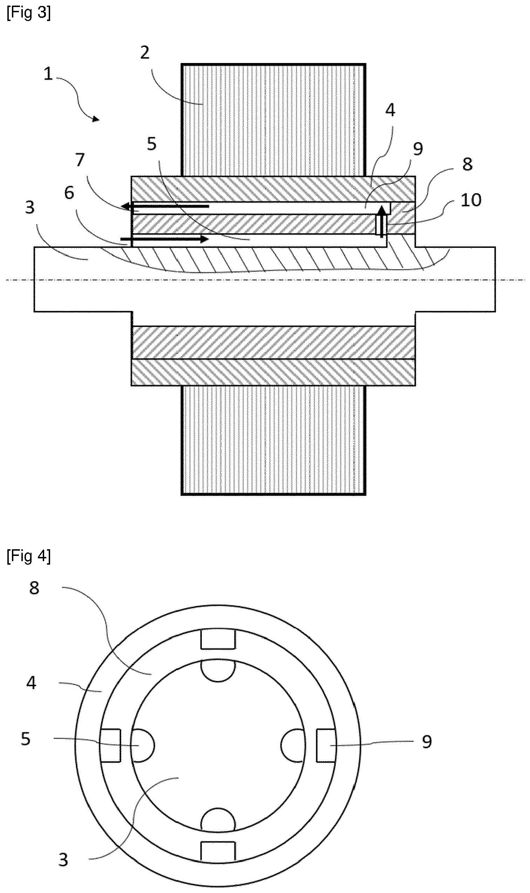

Les figures 3 et 4 illustrent, schématiquement et de manière non limitative, un rotor selon un deuxième mode de réalisation de l'invention. La figure 3 est une vue en coupe axiale et la figure 4 est une vue en coupe transversale. Le rotor 1 comprend un corps de rotor et un empilement de tôles 2, fretté sur le corps de rotor. L'empilement de tôles 2 n'est pas illustré sur la figure 4. Le corps de rotor comprend un arbre de rotor 3, un premier manchon 4 et un deuxième manchon 8. Le deuxième manchon 8 est fretté sur l'arbre de rotor 3, et le premier manchon 4 est fretté sur le deuxième manchon 8. Pour le mode de réalisation illustré, quatre premiers canaux 5 sont formés par des rainures à la périphérie de l'arbre du rotor 3 (toutefois le nombre de premiers canaux peut être différent). Les premiers canaux 5 sont délimités par les rainures réalisées dans l'arbre du rotor 3 et par le deuxième manchon 8. Pour le mode de réalisation illustré, les rainures délimitant les premiers canaux 5 ont sensiblement une section circulaire (toutefois, elles peuvent avoir d'autres formes). Pour le mode de réalisation illustré, quatre deuxièmes canaux 9 sont formés par des rainures à la périphérie du deuxième manchon 8 (toutefois, le nombre de deuxièmes canaux peut être différent). Pour le mode de réalisation illustré, les rainures délimitant les deuxièmes canaux 9 ont sensiblement une section rectangulaire (toutefois, elles peuvent avoir d'autres formes). Une connexion 10 radiale relie les premiers canaux 5 aux deuxièmes canaux 9, la connexion 10 est située à une extrémité du deuxième manchon 8. Les premiers canaux 5 ont une entrée 6 à une extrémité du rotor (opposée à l'extrémité de la connexion radiale 10) et les deuxièmes canaux 9 ont une sortie 7 à la même extrémité du rotor. Les flèches en noir illustrent la circulation du liquide de refroidissement depuis l'entrée, dans les premiers canaux 5, puis dans la connexion radiale 10, puis dans les deuxièmes canaux 9 vers la sortie 7.

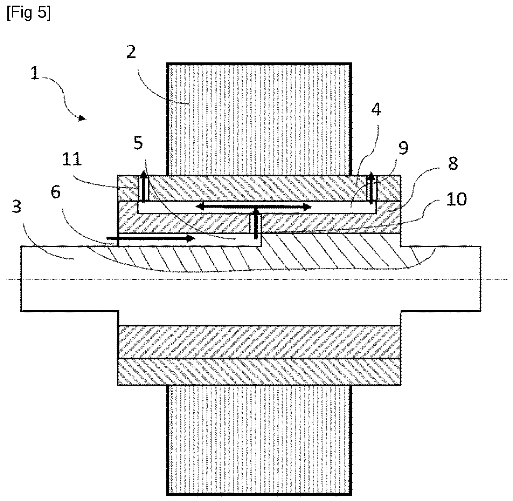

La figure 5 illustre, schématiquement et de manière non limitative, un rotor selon un troisième mode de réalisation de l'invention. La figure 5 est une vue en coupe axiale. La vue en coupe transversale de ce troisième mode de réalisation est similaire à la vue de la figure 4. Le rotor 1 comprend un corps de rotor et un empilement de tôles 2, fretté sur le corps de rotor. Le corps de rotor comprend un arbre de rotor 3, un premier manchon 4 et un deuxième manchon 8. Le deuxième manchon 8 est fretté sur l'arbre de rotor 3, et le premier manchon 4 est fretté sur le deuxième manchon 8. Quatre premiers canaux 5 sont formés par des rainures à la périphérie de l'arbre du rotor 3. Les premiers canaux 5 sont délimités par les rainures réalisées dans l'arbre du rotor 3 et par le deuxième manchon 8. Les rainures délimitant les premiers canaux 5 ont sensiblement une section circulaire. Quatre deuxièmes canaux 9 sont formés par des rainures à la périphérie du deuxième manchon 8. Les rainures délimitant les deuxièmes canaux 9 ont sensiblement une section rectangulaire. Une connexion radiale 10 relie les premiers canaux 5 aux deuxièmes canaux 9. La connexion radiale 10 est située préférentiellement au centre, dans la direction longitudinale du deuxième manchon 8. Le liquide de refroidissement est guidé du centre vers les deux extrémités du premier manchon 4. Les premiers canaux 5 ont une entrée 6 à une extrémité du rotor et les deuxièmes canaux 9 ont des ouvertures radiales 11 pour asperger les têtes de bobines (non représentées) ou le rotor, en particulier l'empilement de tôles. Les flèches en noir illustrent la circulation du liquide de refroidissement depuis l'entrée 6, dans les premiers canaux 5, puis dans la connexion 10, puis dans les deuxièmes canaux 9 vers les ouvertures radiales 11.

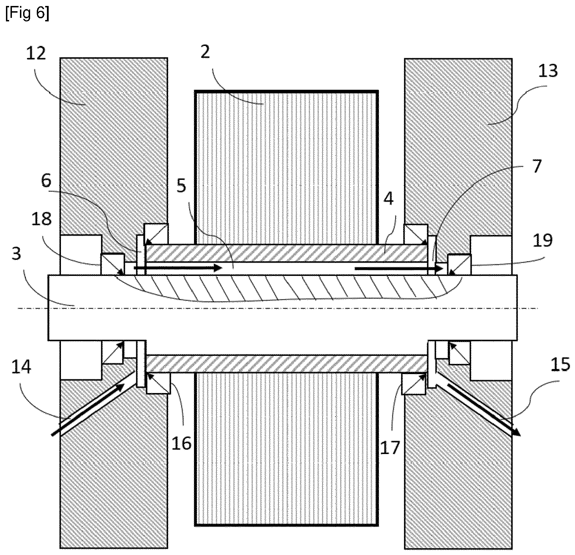

La figure 6 représente, schématiquement et de manière non limitative, une implémentation dans un flasque du premier mode de réalisation du rotor (conformément aux figures 1 et 2). Les éléments identiques aux figures 1 et 2 ne sont pas redécrits. Sur cette figure, les paliers ne sont pas représentés. Le rotor est agencé, à ses extrémités, dans deux flasques 12 et 13. Le flasque 12 comprend une alimentation en liquide de refroidissement 14 qui est en connexion fluidique avec l'entrée 6 du premier canal 5. Le flasque 13 comprend une évacuation en liquide de refroidissement 15 qui est en connexion fluidique avec la sortie 7 du premier canal 5. Ainsi, le liquide de refroidissement circule successivement dans l'alimentation 14, dans l'entrée 6, dans le premier canal 5, dans la sortie 7, dans l'évacuation 15. De plus, chaque flasque 12 et 13 comprend deux éléments d'étanchéité. Sur la figure, des joints d'étanchéité sont représentés, mais ils peuvent être remplacés par des chicanes préférentiellement pour les étanchéités 16 et 17. Dans le flasque 12, un élément d'étanchéité 18 est agencé entre le flasque 12 et l'arbre de rotor 3, et un élément d'étanchéité 16 est agencé entre le flasque 12 et le premier manchon 4. Dans le flasque 13, un élément d'étanchéité 19 est agencé entre le flasque 13 et l'arbre de rotor 3, et un élément d'étanchéité 17 est agencé entre le flasque 13 et le premier manchon 4. Les flèches en noir illustrent la circulation du liquide de refroidissement dans le rotor.

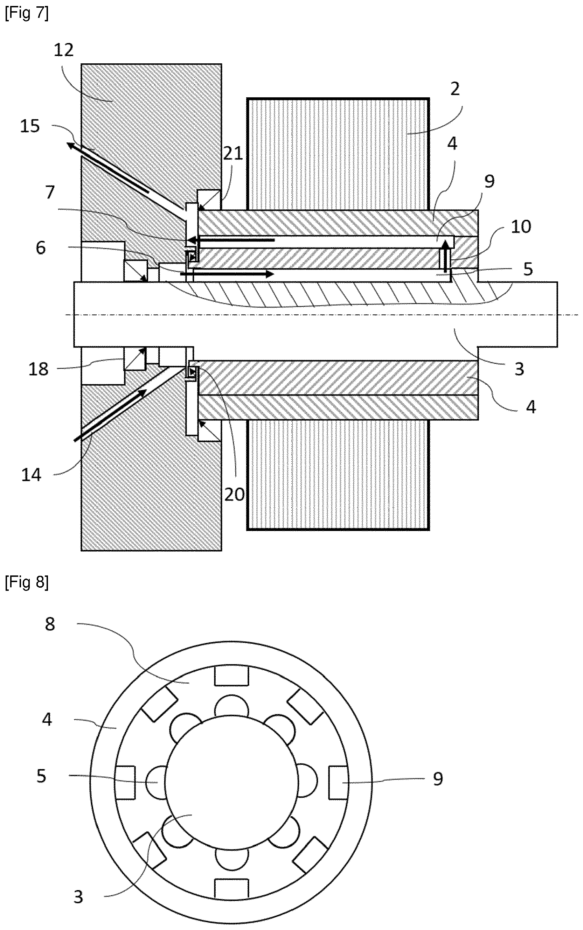

La figure 7 représente, schématiquement et de manière non limitative, une implémentation dans un flasque du deuxième mode de réalisation du rotor (conformément aux figures 3 et 4). Les éléments identiques aux figures 3 et 4 ne sont pas redécrits. Sur cette figure, les paliers ne sont pas représentés. Le rotor est agencé dans deux flasques, mais seul celui avec les alimentation et évacuation en liquide de refroidissement est représenté, l'autre flasque ne comprenant aucune spécificité liée au liquide de refroidissement. Le flasque 12 comprend une alimentation en liquide de refroidissement 14 qui est en connexion fluidique avec l'entrée 6 du premier canal 5. Le flasque 12 comprend en outre une évacuation en liquide de refroidissement 15 qui est en connexion fluidique avec la sortie 7 du deuxième canal 9. Ainsi, le liquide de refroidissement circule successivement dans l'alimentation 14, dans l'entrée 6, dans le premier canal 5, dans la connexion radiale 10, dans le deuxième canal 9, dans la sortie 7, dans l'évacuation 15. De plus, le flasque comprend trois éléments d'étanchéité. Sur la figure, des joints d'étanchéité sont représentés, mais ils peuvent être remplacés par des chicanes préférentiellement pour les étanchéités 20 et 21. Dans le flasque 12, un élément d'étanchéité 18 est agencé entre le flasque 12 et l'arbre de rotor 3, un élément d'étanchéité 20 est agencé entre le flasque 12 et le deuxième manchon 8, et un élément d'étanchéité 21 est agencé entre le flasque 12 et le premier manchon 4. Les flèches en noir illustrent la circulation du liquide de refroidissement dans le rotor.

La figure 8 illustre, schématiquement et de manière non limitative, un rotor selon un quatrième mode de réalisation de l'invention. La figure 8 est une vue en coupe transversale. Le rotor 1 comprend un corps de rotor et un empilement de tôles (non représenté), fretté sur le corps de rotor. Le corps de rotor comprend un arbre de rotor 3, un premier manchon 4 et un deuxième manchon 8. Le deuxième manchon 8 est fretté sur l'arbre de rotor 3, et le premier manchon 4 est fretté sur le deuxième manchon 8. Pour le mode de réalisation illustré, huit premiers canaux 5 sont formés par des rainures sur la surface interne du deuxième manchon 8 à la périphérie de l'arbre du rotor 3 (toutefois le nombre de premiers canaux peut être différent). Les premiers canaux 5 sont délimités par les rainures réalisées dans le deuxième manchon 8 et par l'arbre du rotor 3. Pour le mode de réalisation illustré, les rainures délimitant les premiers canaux 5 ont sensiblement une section circulaire (toutefois, elles peuvent avoir d'autres formes). Pour le mode de réalisation illustré, huit deuxièmes canaux 9 sont formés par des rainures à la périphérie externe du deuxième manchon 8 (toutefois, le nombre de deuxièmes canaux peut être différent). Pour le mode de réalisation illustré, les rainures délimitant les deuxièmes canaux 9 ont sensiblement une section rectangulaire (toutefois, elles peuvent avoir d'autres formes). Une connexion radiale (non représentée) relie les premiers canaux 5 aux deuxièmes canaux 9, la connexion est située à une extrémité du deuxième manchon 8. Pour ce mode de réalisation, la circulation du liquide de refroidissement peut être identique à la circulation du liquide de refroidissement du deuxième mode de réalisation des figures 3 et 4.

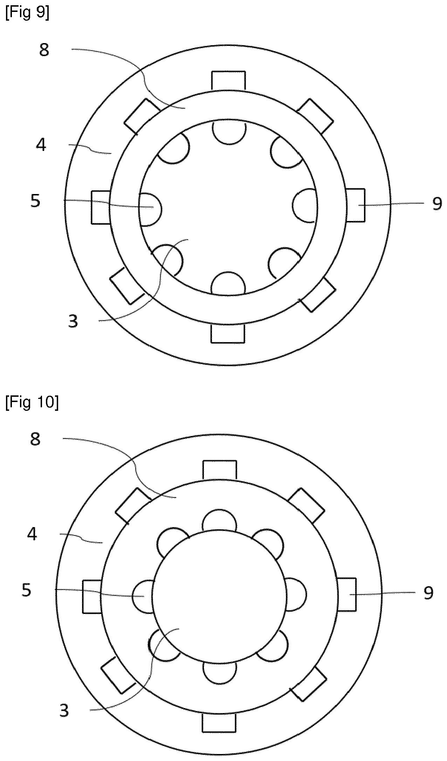

La figure 9 illustre, schématiquement et de manière non limitative, un rotor selon un cinquième mode de réalisation de l'invention. La figure 9 est une vue en coupe transversale. Le rotor 1 comprend un corps de rotor et un empilement de tôles (non représenté), fretté sur le corps de rotor. Le corps de rotor comprend un arbre de rotor 3, un premier manchon 4 et un deuxième manchon 8. Le deuxième manchon 8 est fretté sur l'arbre de rotor 3, et le premier manchon 4 est fretté sur le deuxième manchon 8. Pour le mode de réalisation illustré, huit premiers canaux 5 sont formés par des rainures sur la surface externe à la périphérie de l'arbre du rotor 3 (toutefois le nombre de premiers canaux peut être différent). Les premiers canaux 5 sont délimités par les rainures réalisées dans l'arbre du rotor 3 et par le deuxième manchon 8. Pour le mode de réalisation illustré, les rainures délimitant les premiers canaux 5 ont sensiblement une section circulaire (toutefois, elles peuvent avoir d'autres formes). Pour le mode de réalisation illustré, huit deuxièmes canaux 9 sont formés par des rainures à la périphérie interne du premier manchon 4 (toutefois, le nombre de deuxièmes canaux peut être différent). Pour le mode de réalisation illustré, les rainures délimitant les deuxièmes canaux 9 ont sensiblement une section rectangulaire (toutefois, elles peuvent avoir d'autres formes). Une connexion radiale (non représentée) relie les premiers canaux 5 aux deuxièmes canaux 9, la connexion est située à une extrémité du deuxième manchon 8. Pour ce mode de réalisation, la circulation du liquide de refroidissement peut être identique à la circulation du liquide de refroidissement du deuxième mode de réalisation des figures 3 et 4.

La figure 10 illustre, schématiquement et de manière non limitative, un rotor selon un sixième mode de réalisation de l'invention. La figure 10 est une vue en coupe transversale. Le rotor 1 comprend un corps de rotor et un empilement de tôles (non représenté), fretté sur le corps de rotor. Le corps de rotor comprend un arbre de rotor 3, un premier manchon 4 et un deuxième manchon 8. Le deuxième manchon 8 est fretté sur l'arbre de rotor 3, et le premier manchon 4 est fretté sur le deuxième manchon 8. Pour le mode de réalisation illustré, huit premiers canaux 5 sont formés par des rainures sur la surface interne du deuxième manchon 8 à la périphérie de l'arbre du rotor 3 (toutefois le nombre de premiers canaux peut être différent). Les premiers canaux 5 sont délimités par les rainures réalisées dans le deuxième manchon 8 et par l'arbre du rotor 3. Pour le mode de réalisation illustré, les rainures délimitant les premiers canaux 5 ont sensiblement une section circulaire (toutefois, elles peuvent avoir d'autres formes). Pour le mode de réalisation illustré, huit deuxièmes canaux 9 sont formés par des rainures à la périphérie interne du premier manchon 4 (toutefois, le nombre de deuxièmes canaux peut être différent). Pour le mode de réalisation illustré, les rainures délimitant les deuxièmes canaux 9 ont sensiblement une section rectangulaire (toutefois, elles peuvent avoir d'autres formes). Une connexion radiale (non représentée) relie les premiers canaux 5 aux deuxièmes canaux 9, la connexion est située à une extrémité du deuxième manchon 8. Pour ce mode de réalisation, la circulation du liquide de refroidissement peut être identique à la circulation du liquide de refroidissement du deuxième mode de réalisation des figures 3 et 4.

Comme il va de soi, l'invention ne se limite pas aux seules formes de réalisation du rotor, décrits ci-dessus à titre d'exemple, elle embrasse au contraire toutes les variantes de réalisation.

## Revendications

1. Rotor de machine électrique, ledit rotor (1) comprenant un corps de rotor et un empilement de tôles (2) fretté sur ledit corps de rotor, ledit corps de rotor comprenant un arbre de rotor (3), un premier manchon (4) sur lequel est fretté ledit empilement de tôles (2), et au moins un premier canal (5) pour la circulation d'un liquide de refroidissement, **caractérisé en ce que** ledit au moins un premier canal (5) est longitudinal, et agencé à la périphérie radiale dudit arbre du rotor (3) entre ledit arbre du rotor (3) et ledit premier manchon (4).

2. Rotor de machine électrique selon la revendication 1, dans lequel chaque premier canal (5) est formé par une rainure longitudinale réalisée sur la surface extérieure dudit arbre du rotor (3).

3. Rotor de machine électrique selon l'une des revendications précédentes, dans lequel ledit corps de rotor comprend un deuxième manchon (8) agencé entre ledit arbre de rotor (3) et ledit premier manchon (4).

4. Rotor de machine électrique selon la revendication 3, dans lequel au moins un deuxième canal (9) longitudinal est formé à la périphérie extérieure dudit deuxième manchon (8), ledit au moins deuxième canal (9) étant relié audit au moins un premier canal (5).

5. Rotor de machine électrique selon l'une des revendications 3 ou 4, dans lequel ledit deuxième manchon (8) comprend au moins une rainure longitudinale réalisée sur la surface extérieure et/ou sur la surface intérieure pour réaliser respectivement ledit au moins un deuxième canal (9) et/ou ledit au moins un premier canal (5).

6. Rotor de machine électrique selon l'une des revendications précédentes, dans lequel chaque manchon (4 ; 8) est monté par frettage.

7. Rotor de machine électrique selon l'une des revendications précédentes, dans lequel chaque manchon (4 ; 8) est réalisé en aluminium ou en alliage d'aluminium, ou en acier.

8. Rotor de machine électrique selon l'une des revendications précédentes, dans lequel ledit premier manchon (4) comprend des ouvertures radiales (11) à ses extrémités.

9. Rotor de machine électrique selon l'une des revendications précédentes, dans lequel l'entrée (6) et la sortie (7) dudit liquide de refroidissement sont agencées à une unique extrémité dudit corps de rotor, ou aux deux extrémités dudit corps de rotor.

10. Machine électrique comprenant un rotor (1) selon l'une des revendications précédentes, un stator coaxial audit rotor, un carter entourant ledit stator et deux flasques (12, 13) agencés respectivement aux extrémités dudit carter.

11. Machine électrique selon la revendication 10, dans lequel une alimentation en liquide de refroidissement (14) est agencée dans un premier flasque (12) et une évacuation du liquide de refroidissement (15) est agencée dans ledit premier flasque (12) ou dans le deuxième flasque (13), l'alimentation en liquide de refroidissement étant reliée audit au moins un premier canal (5).

12. Machine électrique selon l'une des revendications 10 ou 11, dans lequel au moins un desdits flasques (12, 13) comporte des moyens d'étanchéité (16, 17, 18, 19, 20, 21) entre ledit corps de rotor et un flasque, notamment des joints ou des chicanes.
